# EUROPEAN PATENT SPECIFICATION

(11) **EP 1 629 022 B1**
(45) Date of publication and mention of the grant of the patent: **20.09.2006**
(21) Application number: 04766035.2
(22) Date of filing: 04.06.2004
(51) Int. Cl.: C08G 18/48, C08G 65/26, C08K 5/00

(54) **POLYETHER POLYOL COMPOSITION**
POLYETHERPOLYOLZUSAMMENSETZUNG
COMPOSITION DE POLYOL POLYETHER

(30) Priority: 04.06.2003 EP 03253525
(43) Date of publication of application: 01.03.2006
(73) Proprietor: SHELL INTERNATIONALE RESEARCH MAATSCHAPPIJ B.V., 2596 HR Den Haag (NL)
(72) Inventor: DUIJGHUISEN, Henricus, Petrus, Bernardus, NL-1031 CM Amsterdam (NL); ELEVELD, Michiel, Barend, NL-1031 CM Amsterdam (NL); SCHUT, Peter, Alexander, NL-1031 CM Amsterdam (NL)
(86) International application number: PCT/EP2004/051038
(87) International publication number: WO 2004/108789

(56) References cited:
- EP-A- 0 759 450
- GB-A- 1 085 943
- US-A- 5 269 961
- US-A- 5 695 689
- US-A- 5 854 386

## Description

The present invention relates to a polyether polyol composition.

### Background of the invention

Polyether polyols are well known. They are used for many purposes. The polyols can be used for preparing polyurethanes by reacting them with polyisocyanates under appropriate conditions. Polyurethane products that can be made include polyurethane coatings, elastomers, sealants, foams, and adhesives. Additionally, the polyether polyols can be used in other applications such as base fluids in lubricants and operational fluids such as compressor lubricants, automotive lubricants, gear oils, greases, aviation turbine lubricants, metal cutting fluids and hydraulic fluids.

Conventionally, polyether polyols are prepared by reacting a hydroxyl group-containing initiator containing active hydrogen atoms with alkylene oxide like propylene oxide and ethylene oxide in the presence of a potassium hydroxide catalyst to yield polyether polyols, also referred to as poly(alkylene oxide) polymers.

Nowadays, the potassium hydroxide catalyst can be replaced by double metal cyanide (DMC) complex catalysts. These compounds are well known catalysts for epoxide polymerization, i.e. for polymerizing alkylene oxides. The catalysts are highly active, and give polyether polyols that have low unsaturation compared with similar polyols made using strong basic catalysts like potassium hydroxide.

Polyether polyol compositions generally contain antioxidant in order to improve their storage stability. EP-A-759450 teaches to use about 500 ppm of phenolic antioxidant such as butylated hydroxytoluene if a polyether polyol composition contains of from 50 to 250 ppm or higher of double metal cyanide complexes.

Surprisingly, we have now found a more effective antioxidant for use in polyether polyol compositions containing DMC complex catalysts.

### Summary of the invention

The present invention relates to a polyether polyol composition which composition comprises (a) polyether polyol, (b) double metal cyanide complex catalyst, and (c) of from 100 to 10,000 parts per million by weight of amine antioxidant, based on weight amount of polyether polyol (ppm).

### Detailed discussion of the invention

The polyether polyol compositions according to the present invention comprise double metal cyanide complex catalyst. This catalyst will usually originate from the polyether polyol manufacture. The double metal cyanide complex can be present in the form in which it was added to the polyether polyol manufacture or in the form in which it was active during manufacture of the polyether polyol, or it can be present as a derivative. Such derivative can be obtained if the DMC catalyst was deactivated. Deactiviation can be necessary in order to prepare a polyether polyol having a poly(ethylene oxide) end-block. The composition according to the present invention contains either double metal cyanide complex catalyst or a derivative or residue of the double metal cyanide complex catalyst.

The amounts given in relation with the present invention are based on the weight amount of polyether polyol present in the composition according to the present invention.

The polyether polyols present in the composition according to the present invention are prepared by contacting a hydroxyl group-containing initiator with alkylene oxide in the presence of double metal cyanide (DMC) complex catalyst. The alkylene oxide can in principle be any alkylene oxide. Preferably, the alkylene oxide comprises of from 2 to 10 carbon atoms, preferably of from 2 to 6 carbon atoms, more preferably of from 2 to 4 carbon atoms. Preferred alkylene oxides for use in the present invention are ethylene oxide, propylene oxide, butene oxide, styrene oxide and mixtures thereof. Most preferably, the alkylene oxide is propylene oxide and/or ethylene oxide.

A wide range of hydroxyl group-containing initiators can be used for the preparation of polyether polyols for use in the present invention. The hydroxyl group-containing initiator may be water; ethylene glycol; diethylene glycol; triethylene glycol; propylene glycol; dipropylene glycol; tripropylene glycol; 1,2-, 1,3-, and 1,4-butylene glycols; neopentyl glycol; glycerine, trimethylolpropane; triethylolpropane; pentaerythritol, .alpha.-methylglucoside; hydroxy-methyl-, hydroxyethyl-, and hydroxypropylglucosides; sorbitol, mannitol and sucrose. Also suitable are monofunctional hydroxyl group-containing initiators such as methanol, ethanol, 1-propanol, 2-propanol, n-butanol, 2-butanol, 2-ethylhexanol, and the like, as well as phenol, catechol, 4,4'-dihydroxybiphenyl, 4,4'-dihydroxydiphenylmethane.

Hydroxyl group-containing initiators which are generally used are compounds containing at least 1 active hydrogen atoms, more preferably at least 2 active hydrogen atoms. Preferred hydroxyl group-containing initiators are organic compounds containing on average at least 1 hydroxyl group, preferably containing on average more than 1 hydroxyl group. More preferably, the hydroxyl group-containing initiators are organic compounds containing of from 2 to 6 hydroxyl groups. Examples of such alcohols are glycol, such as diethylene glycol, dipropylene glycol, glycerol, di- and polyglycerols, pentaerythritol, trimethylolpropane, triethanolamine, sorbitol and mannitol.

Typically, the hydroxyl group-containing initiator is reacted with alkylene oxide at a temperature of from 50 to 150 °C, more particularly from 80 to 130 °C at atmospheric pressure. Higher pressures may also be applied, but the pressure will usually not exceed 20 bar and preferably is from 1 to 5 bar. The process may be carried out in the presence or in the absence of an inert solvent. Suitable inert solvents are cyclohexane, toluene, xylene, diethyl ether, dimethoxyethane and/or chlorinated hydrocarbon (such as methylene chloride, chloroform or 1,2-dichloro-propane). The solvent, if used, is generally used in an amount of from 10 to 30 %wt.

DMC complex catalysts are well known in the art. It has been found that in the present invention in principle any DMC catalyst can be used which is known to be suitable for processes in which alkylene oxide is reacted with a hydroxyl group-containing initiator. The DMC complex catalyst present in the composition of the present invention preferably contains t-butanol ligand.

Generally, DMC catalysts for use in the present invention exhibits a powder x-ray diffraction pattern exhibiting no detectable signals corresponding to highly crystalline zinc hexacyanocobaltate at about (d-spacing, angstroms) 5.07. More specifically, such DMC catalysts generally exhibit a powder x-ray diffraction pattern of (d-spacing, angstroms) : 4.82 (br), 3.76 (br) and exhibits no detectable signals corresponding to highly crystalline zinc hexacyanocobaltate at about (d-spacing, angstroms) : 5.07 , 3.59 , 2.54 and 2.28.

A process by which the DMC catalyst for use in the present invention can be prepared, has been described in Japanese application 4-145123. The catalyst which is prepared is a bimetallic cyanide complex having tertiary butanol coordinated as organic ligand.

Another process by which the DMC catalyst can be prepared, has been described in PCT patent application PCT/EP01/03498. The process described comprises the steps of
(a) combining an aqueous solution of a metal salt with an aqueous solution of a metal cyanide salt and reacting these solutions, wherein at least part of this reaction takes place in the presence of an organic complexing agent, thereby forming a dispersion of a solid DMC complex in an aqueous medium;
(b) combining the dispersion obtained in step (a) with a liquid, which is essentially insoluble in water and which is capable of extracting the solid DMC complex formed in step (a) from the aqueous medium, and allowing a two-phase system to be formed consisting of a first aqueous layer and a layer containing the DMC complex and the liquid added;
(c) removing the first aqueous layer; and
(d) recovering the DMC catalyst from the layer containing the DMC catalyst.

Typically, DMC catalyst present in the composition according to the present invention will have the formula Zn₂[Co(CN)₆]Cl.nC.mH₂O.pA
wherein C is the ligand used and A is the compound of general formula (I) used. Preferably, C is tert-butyl alcohol and A is methyl tert-butyl ether, di-ethyl ether, di-isopropyl ether, tert-amyl methyl ether or di-butyl ether. Preferably, n is of from 0 to 10, m is of from 0 to 20 and p is of from 0 to 10.

The amount of DMC catalyst present in the polyether polyol composition, can vary within wide ranges. The amount of DMC catalyst is preferably less than 150 parts per million (ppm), more preferably less than 100 ppm, more preferably less than 50 ppm, more preferably at most 25 ppm, more preferably less than 25 ppm, more preferably at most 10 ppm, more preferably less than 10 ppm, based on amount of polyether polyol.

The amine antioxidant which was found to be especially suitable for use in the present invention, is an amine antioxidant according to the following general formula: 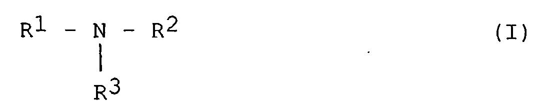 in which R¹ , R² and R³ each independently are hydrogen or a hydrocarbon having of from 1 to 30 carbon atoms, preferably hydrogen or an alkyl, cycloalkyl or aryl having of from 1 to 30 carbon atoms. Antioxidants which were found to be effective are N,N-dimethyl-N-cyclohexylamine and octylated diphenylamine. Preferably, R¹ is hydrogen and R² and R³ each independently are an alkyl, cycloalkyl or aryl, preferably a cycloalkyl or aryl, containing of from 5 to 25 carbon atoms. More specifically, it is preferred that R² and R³ each independently are an alkyl substituted phenyl in which the alkyl substituent contains of from 5 to 10 carbon atoms. Most preferably, the amine antioxidant is octylated diphenylamine. A commercially available octylated diphenylamine is Irganox 5057.

The amount of amine antioxidant which is present is influenced by the further circumstances. Generally, an amount of less than 100 ppm does not sufficiently stabilise the polyether polyol composition while more than 10,000 ppm does not substantially increase the stabilisation. The specific preferred amount of antioxidant generally differs per application. The polyether polyol composition of the present invention is preferably used in slabstock applications. For such application, the polyol composition of the present invention preferably contains of from 1000 to 10,000 ppm of amine antioxidant, more specifically the amount of antioxidant preferably is of from 1000 ppm to 8000 ppm.

The composition according to the present invention can contain additional antioxidants such as compounds which are derivatives of phenol.

The polyether polyol composition according to the present invention can contain further additives such as fillers, flame retardants, foam stabilisers (surfactants) and colourants. The flame retardants can be liquid and/or solid flame retardants. Organosilicone surfactants are most conventionally applied as foam stabilisers in polyurethane production. A large variety of such organosilicone surfactants is commercially available.

A preferred compound is compound L2100 commercially available from Osi. Usually, such foam stabiliser is used in an amount of up to 5% by weight based on the reaction mixture of polyol reactant and polyisocyanate reactant. The amount in which the usual auxiliaries can be present, can vary widely. Generally, the amount will be of from 0 to 50 parts by weight, based on amount of polyol, more specifically of from 0 to 40 parts by weight.

Additionally, the polyether polyol compositions according to the present invention can be used in other applications such as base fluids in lubricants and operational fluids.

The present invention is hereinafter exemplified.

### Example

### Procedure A

A 5 liter stirred reactor was charged with 379 grams of a 1,2-propanediol/propylene oxide adduct having an average molecular weight of 400 (PPG400). Additionally, 32 g is added of solution of 3%w of a double metal cyanide complex catalyst in PPG400. The double metal cyanide complex catalyst was prepared as described in WO 01/72418.

The reactor was stripped with nitrogen under vacuum to remove traces of water and heated to 105 °C. A minor amount of propylene oxide was fed to the reactor and the reactor pressure was monitored carefully. Additional propylene oxide was not added until an accelerated pressure drop occurred in the reactor. The pressure drop indicates that the catalyst has become activated. When catalyst activation is verified, sufficient propylene oxide was added gradually over 2 hours to obtain a polyol having an average molecular weight of 4000. The concentration of double metal cyanide complex catalyst in the polyol was 275 ppm.

### Procedure B

In an experiment similar to the one of Procedure A, a polyol was obtained having an average molecular weight of 4000 but containing 30 ppm of double metal cyanide complex catalyst.

### Procedure C

A polyol containing substantially no double metal cyanide complex catalyst was obtained by removing the double metal cyanide complex catalyst from the polyol containing 30 ppm catalyst as obtained in Procedure B.

### Samples

In the experiments, the following antioxidants were added:
Ionol : 2,6-bis(1,1-dimethylethyl)-4-methyl-phenol, butylated hydroxytoluene (BHT)
Irganox 5057 : octylated diphenyl amine

Samples were made containing the above polyols (comprising 0, 30 and 250 ppm double metal cyanide complex catalyst) and different amounts of Ionol or Irganox 5057 antioxidant (500, 1500 and 5000 ppm).

### Storage Stability Test

Samples were analysed by headspace gas chromatography and titration to obtain the total carbonyl content and acid number of the polyol samples and subsequently the samples were placed in an oven at 100 °C for 7 days in the dark. After this treatment, the total carbonyl content and acid number of the polyol samples was measured again. The change in the total carbonyl content and acid number (before and after the storage stability test) is shown in Tables 1 and 2.

**Table 1**

| DMC (ppm) | Ionol (ppm) | Decrease in acid number (mg KOH/g poyol) | Increase in carbonyl content (ppm) |
|---|---|---|---|
| 0 | 500 | 0.04 | 45 |
| 30 | 500 | 0.01 | 35 |
| 275 | 500 | 0.04 | 31 |
| 0 | 1500 | 0.01 | 4 |
| 30 | 1500 | 0.01 | 2 |
| 275 | 1500 | 0.01 | 4 |
| 0 | 5000 | 0.00 | 1 |
| 30 | 5000 | 0.01 | 2 |
| 275 | 5000 | 0.00 | 2 |

**Table 2**

| DMC (ppm) | Irganox 5057 (ppm) | Decrease in acid number (mg KOH/g poyol) | Increase in carbonyl content (ppm) |
|---|---|---|---|
| 0 | 500 | * | 0 |
| 30 | 500 | 0.01 | 2 |
| 275 | 500 | 0.03 | 3 |
| 0 | 1500 | * | 3 |
| 30 | 1500 | 0.00 | 2 |
| 275 | 1500 | 0.01 | 2 |
| 0 | 5000 | * | 0 |
| 30 | 5000 | 0.01 | 3 |
| 275 | 5000 | 0.02 | 3 |

| | | | |
|---|---|---|---|
| * : not measured | | | |

## Claims

1. Polyether polyol composition which composition comprises (a) polyether polyol, (b) double metal cyanide complex catalyst, and (c) of from 100 to 10,000 parts per million by weight of amine antioxidant, based on weight amount of polyether polyol (ppm).

2. Polyether polyol composition according to claim 1, in which composition the amine antioxidant is according to the general formula (I): 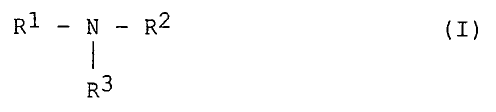 in which R¹, R² and R³ each independently are hydrogen or a hydrocarbon having of from 1 to 30 carbon atoms.

3. Polyether polyol composition according to claim 2 in which R¹ is hydrogen and R² and R³ each independently are a cycloalkyl or aryl containing of from 5 to 25 carbon atoms.

4. Polyether polyol composition according to any one of the preceding claims in which the double metal cyanide complex catalyst contains t-butanol ligand.

5. Polyether polyol composition according to any one of the preceding claims in which the amount of double metal cyanide complex catalyst is less than 150 ppm.

6. Polyether polyol composition according to claim 4 in which the amount of double metal cyanide complex catalyst is less than 50 ppm.

## Patentansprüche

1. Polyetherpolyolzusammensetzung, welche Zusammensetzung (a) Polyetherpolyol, (b) einen Doppelmetallcyanidkomplexkatalysator und (c) 100 bis 10.000 Gew.-Teile pro Million (ppm) an Aminantioxidans, bezogen auf die Gewichtsmenge an Polyetherpolyol, umfaßt.

2. Polyetherpolyolzusammensetzung nach Anspruch 1, in welcher Zusammensetzung das Aminantioxidans der allgemeinen Formel (I): 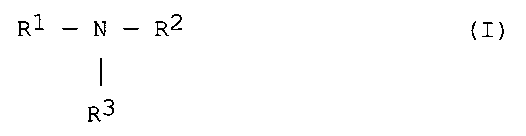 entspricht, worin R¹, R² und R³ jeweils unabhängig Wasserstoff oder ein Kohlenwasserstoff mit 1 bis 30 Kohlenstoffatomen sind.

3. Polyetherpolyolzusammensetzung nach Anspruch 2, worin R¹ Wasserstoff darstellt und R² und R³ jeweils unabhängig ein Cycloalkyl oder Aryl mit 5 bis 25 Kohlenstoffatomen sind.

4. Polyetherpolyolzusammensetzung nach einem der vorstehenden Ansprüche, worin der Doppelmetallcyanidkomplexkatalysator einen tert.-Butanolliganden umfaßt.

5. Polyetherpolyolzusammensetzung nach einem der vorstehenden Ansprüche, worin die Menge an Doppelmetallcyanidkomplexkatalysator weniger als 150 ppm beträgt.

6. Polyetherpolyolzusammensetzung nach Anspruch 4, worin die Menge an Doppelmetallcyanidkomplexkatalysator weniger als 50 ppm beträgt.

## Revendications

1. Composition de polyétherpolyol dont la composition comprend (a) un polyétherpolyol, (b) un catalyseur complexe de cyanure bimétallique et (c) 100 à 10.000 parties par million en poids d'antioxydant d'amine par rapport à la quantité en poids de polyétherpolyol (ppm).

2. Composition de polyétherpolyol selon la revendication 1, dans laquelle l'antioxydant d'amine répond à la formule générale (I) : 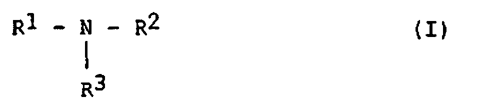 dans laquelle R¹, R² et R³ sont, indépendamment l'un de l'autre, de l'hydrogène ou un groupement hydrocarboné ayant 1 à 30 atomes de carbone.

3. Composition de polyétherpolyol selon la revendication 2, dans laquelle R¹ est de l'hydrogène et R² et R³ représentent, indépendamment l'un de l'autre, un groupement cycloalkyle ou aryle qui contient 5 à 25 atomes de carbone.

4. Composition de polyétherpolyol selon l'une quelconque des revendications précédentes, dans laquelle le catalyseur complexe de cyanure bimétallique contient un ligand de t-butanol.

5. Composition de polyétherpolyol selon l'une quelconque des revendications précédentes, dans laquelle la quantité de catalyseur complexe de cyanure bimétallique est inférieure à 150 ppm.

6. Composition de polyétherpolyol selon la revendication 4, dans laquelle la quantité de catalyseur complexe de cyanure bimétallique est inférieure à 50 ppm.
